# EUROPEAN PATENT APPLICATION

(11) **EP 3 747 828 A1**
(43) Date of publication of application: **09.12.2020**
(21) Application number: 20166763.1
(22) Date of filing: 30.03.2020
(51) Int. Cl.: B67B 3/00, B67B 3/06, B67B 3/20

(54) **DEVICE FOR APPLYING CAPS**

(30) Priority: 29.05.2019 IT 201900007527
(71) Applicant: CO.M.A.N. S.r.l., 43010 Fontevivo (PR) (IT)
(72) Inventor: GRASSANI, Bruno, 43015 NOCETO (PR) (IT)
(74) Representative: Gotra, Stefano

(57) **Abstract**

A positioner of caps on corresponding containers comprising:
i) a movement line (4) of the containers;
ii) supply means (2) of the caps;
iii) a first gripper (3) for gripping one of the caps; said first gripper (3) being movable between:
- a first orientation in which it is facing towards the supply means (2) in order to pick up one of the caps;
- a second orientation in which it is facing towards the movement line (4) of the containers in order to fit one of the caps to one of said containers.

## Description

The object of the present invention is a positioner of caps on corresponding containers and a method for positioning a cap on a corresponding container.

This enables the caps to be applied to a bottle neck. Positioners of caps located on rotary machines (carousels) are known. The supply means moves the cap as far as a zone in which the movement line of bottles to be capped is present. The caps are dropped by gravity and fall onto the neck of the bottles. One drawback of this solution is linked to the fact that sometimes the caps are not centred perfectly on the bottle. They may be unstably balanced on the neck and fall a little further (especially if the cap has a side wall defining a mouth that is slightly narrower than the nominal mouth). This makes it necessary to reprocess the bottles to which the cap has not been properly fitted.

In this context, the technical task underpinning the present invention is to provide a positioner of caps and a method for positioning caps that enables caps to be fitted to the containers, minimising the risk of failure during this operation.

The defined technical task and the specified aims are substantially achieved by a positioner of caps and a method for positioning caps comprising the technical characteristics set forth in one or more of the appended claims.

Further characteristics and advantages of the present invention will become more apparent from the approximate and thus non-limiting description of a preferred, but not exclusive, embodiment of a positioner of caps and method for positioning caps, as illustrated in the accompanying drawings, in which:
- figure 1 shows a front view of a positioner according to the present invention;
- figure 2 shows a view according to the section plane A-A of figure 1, with some parts removed;
- figure 2a shows an enlargement of a detail of figure 2;

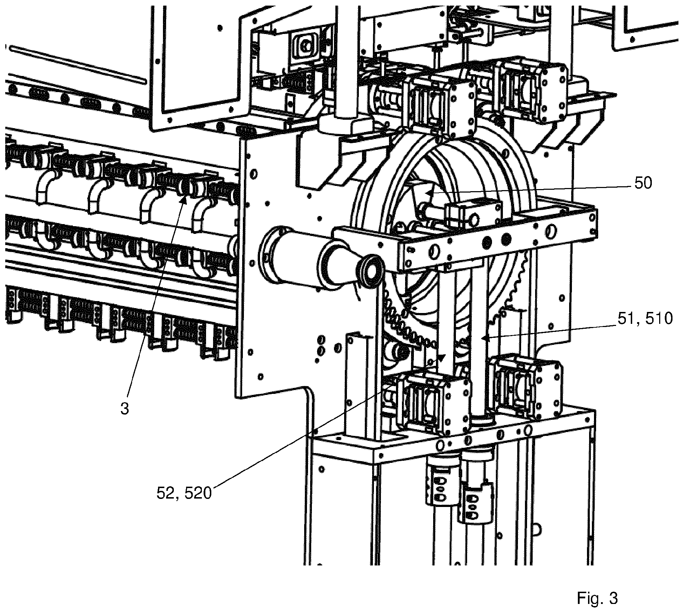

- figure 3 shows a perspective view of a portion of the positioner according to the present invention;

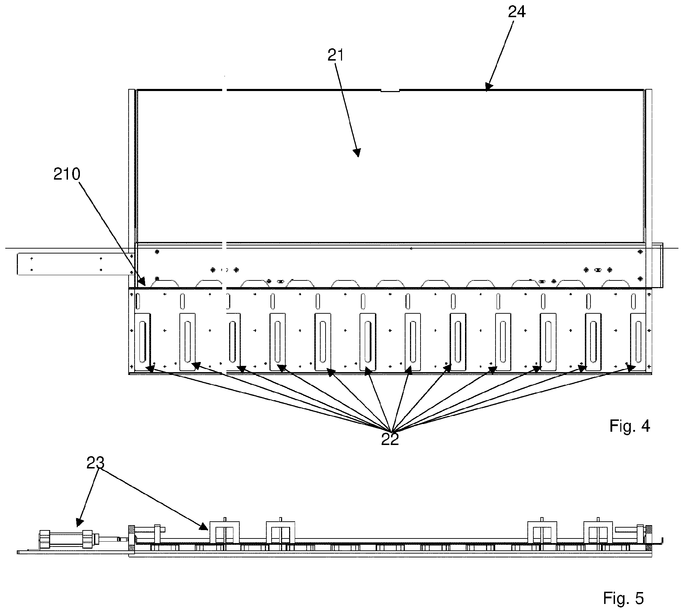

- figure 4 shows a detailed view of a component of the positioner of figure 1;
- figure 5 shows a top view of the component of figure 4;
- figure 6 shows a component of the positioner according to the present invention;
- figures 7 and 8 show two different operating configurations of the component of figure 6;
- figures 9a-9f show schematically a succession of steps of the method according to the present invention.

In the appended figures, reference number 1 denotes a positioner of capsules on corresponding containers. Typically, they are caps made of plastic. They are fitted to the neck of corresponding containers. Such containers could for example be made of plastic or glass or yet another material. Downstream, the caps are normally locked on the containers (for example in a capping station).

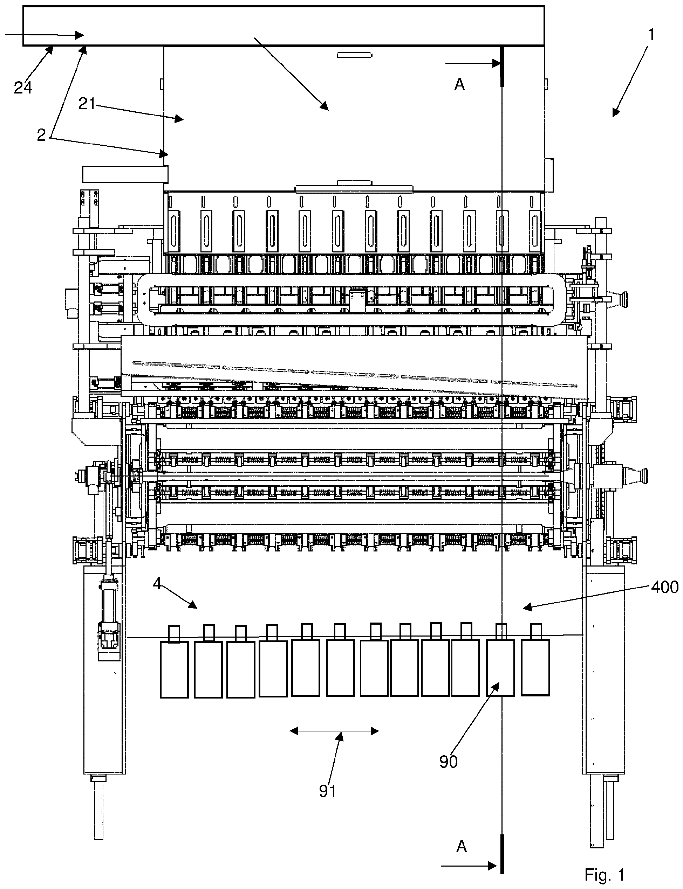

The positioner 1 comprises a transit zone 400 for the containers. The positioner 1 also comprises a container movement line 4. The container movement line 4 transits through the transit zone 400. This movement line 4 extends preferably along a rectilinear segment (orthogonal to the plane of the sheet of figure 1). It does not thus occur on a rotating carousel. The movement line 4 advantageously alternates an advancement step with an arrest step. The caps are in fact fitted when the movement line 4 is stopped temporarily.

The movement line 4 advantageously comprises dragging means for dragging the containers. The dragging means grasps the containers, for example at the neck. Along the movement line 4, the containers are preferably placed next to one another along a direction 91 that is transverse (typically orthogonal) to an advancement direction (orthogonal to the plane of the sheet in figure 1). Further, the containers also follow one another along the advancement direction.

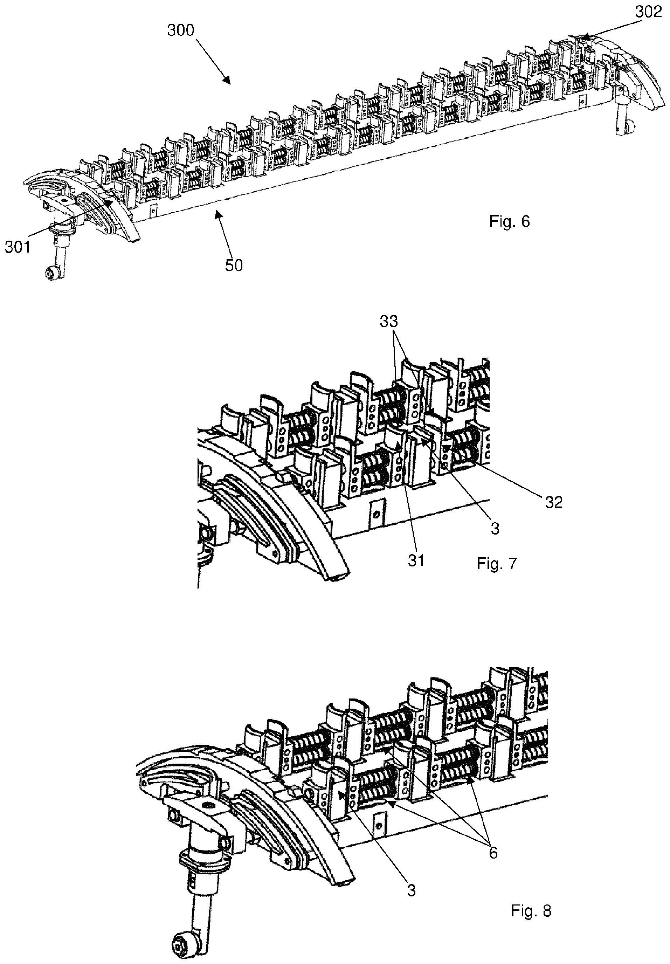

The positioner 1 advantageously comprises supply means 2 of the caps (to at least the first gripping gripper 3 described immediately below here). The positioner 1 comprises a first gripper 3 for gripping one of the caps. The first gripper 3 advantageously grasps the caps externally; advantageously without contacting the inner concavity of the caps (for reasons of hygiene). Subsequently, for the sake of simplicity, reference will be made to just one gripper, but advantageously the positioner 1 comprises several grippers 300 that enable the caps to be positioned on corresponding containers. What has been indicated for the operation of a single gripper is also repeatable for the other grippers 300. At least part of said grippers 300 thus operate parallel to one another. They enable the caps to be positioned simultaneously on corresponding containers. The first gripper 3 is movable between a locking configuration (see figure 8) and a release configuration (see figure 7). In the locking configuration, the first gripper 3 is suitable for retaining the cap. In the release configuration, the first gripper 3 is suitable for releasing the cap.

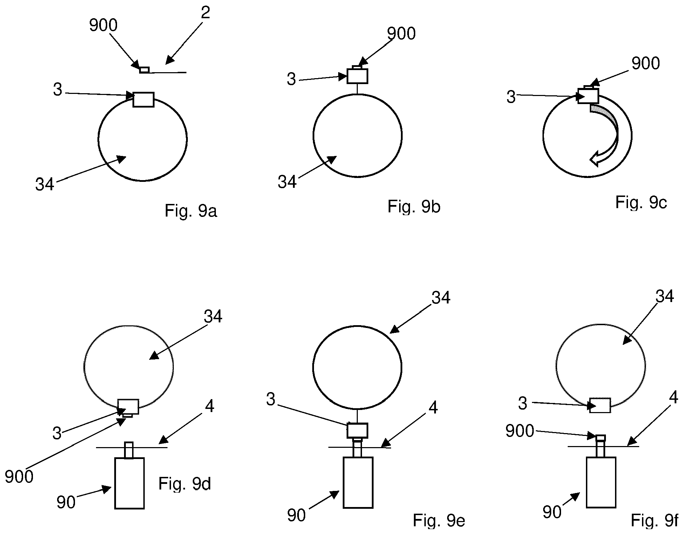

The first gripper 3 is movable between a first orientation (see figures 9a, 9b, 9c) and a second orientation (see figures 9d, 9e, 9f). The first gripper 3 thus adopts a first and a second orientation. In the first orientation, it faces the supply means 2 in order to pick up one of the caps. This means that it enables a cap coming from the supply means 2 to be grasped. In the first orientation, the first gripper 3 advantageously faces upwards. By maintaining the first orientation, the first gripper 3 can translate to approach an end/outlet of the supply means 2 and grasp the cap. In order to do so, the first gripper 3 can translate between a first location (see figures 9a and 9c) and a second location (see figure 9b); in the first location the first gripper 3 is further away from the supply means 2; in the second location the first gripper 3 is nearer the supply means 2. In order to move from the first to the second location, the first gripper 3 translates vertically. As is clear from what has been indicated above, the supply means 2 thus conveys the caps as far as a system for handling the caps that comprises the first gripper 3 (or more in general the grippers 300).

In the second orientation, the first gripper 3 faces the transit zone 400 of the containers (in particular faces the movement line 4 of the containers) to fit the cap previously removed by the means 2 onto a corresponding container. This means that it enables a cap to be released on the movement line 4. In the second orientation, the first gripper 3 advantageously faces downwards.

After taking on the second orientation, the first gripper 3 advantageously again adopts the first orientation. The movement of the first gripper 3 between the first and the second orientation is cyclical.

The positioner 1 advantageously comprises a rotor 34 to which the first gripper 3 is applied; this rotor 34 is rotatable around a rotation axis 30 to move from a first position (see figures 9a, 9b, 9c) to a second position (see figures 9d, 9e, 9f); the first orientation of the first gripper 2 is associated with the first position of the rotor 34. The second orientation of the first gripper 3 is associated with the second position of the rotor 34. Preferably, this rotation axis 30 is substantially horizontal. The rotor 34 is rotated in the second position by 180° with respect to the first position.

The first gripper 3, by adopting the first orientation, is aligned vertically on the rotation axis 30. The first gripper 3, by adopting the second orientation, is aligned vertically on the rotation axis 30. The first gripper 3 is advantageously located in two diametrically opposite positions when it adopts the first and the second orientation. These two positions preferably lie on the same (imaginary) vertical plane. When moving from the first orientation to the second orientation, the first gripper 3 maintains the clamping configuration. When taking on the second orientation, the first gripper 3 is lower than when taking on the first orientation.

The first gripper 3 is movable between a first configuration (see figures 9d and 9f) and a second configuration (see figure 9e) by maintaining the second orientation. In the second configuration, the first gripper 3 is advantageously lower than in the first configuration; in the second configuration the first gripper 3 is advantageously nearer the movement line 4 of the containers than in the first configuration (or in other words, it is further from an outlet of the supply means 2 compared with the first configuration). Advantageously, in order to pass from the first to the second configuration, the first gripper 3 translates (along a rectilinear line that is typically radial with respect to the rotation axis 30). In other words, the first gripper 3 is movable radially to move from the first to the second configuration to fit one of the caps on the container. In particular, by moving from the first to the second configuration, the first gripper 3 moves downwards.

In particular, by moving from the first to the second configuration, the first gripper 3 is in the clamping configuration.

The first gripper 3 comprises a first and a second jaw 31, 32 that are suitable, in combination, for grasping and releasing one of the caps.

In the clamping configuration, the first and the second jaw 31, 32 are moved towards one another with respect to the release configuration. This enables the cap interposed between the first and the second jaw 31, 32 to be retained.

Advantageously, the first gripper 3 is driven pneumatically to move from the closed configuration to the release configuration. Advantageously, the first gripper 3 is returned elastically. As a result, elastic means 6 is present that pushes the first gripper 3 from the release configuration to the clamping configuration.

The first and second jaw 31, 32 comprise a retaining relief 33 to retain the caps destined to engage in a corresponding groove of one of the caps. This relief 33 is typically configured as a tooth. It extends along an arc of a circle. Advantageously, it is inserted into a groove that divides a security seal from remaining parts of the cap.

When the first gripper 3 adopts the first orientation, the first and the second jaw 31, 32 define an inlet for the cap facing the supply means 2. When the gripper 3 adopts the second orientation, the first and the second jaw 31, 32 define an outlet for the cap facing the transit zone 400 or anyway the movement line 4 (or anyway downwards).

As disclosed previously, a plurality of grippers 300 are present that work in parallel. Advantageously, at least one part of the grippers 300 is driven simultaneously by the same pressurised source to move from the clamping configuration to the release configuration. Said grippers 300 (or at least a part of them), are placed on the same rotor 34 and move integrally from the first orientation, in which they face the supply means 2, to the second orientation in which they face the movement line 4 of the containers. A first group 301 of said grippers 300 is advantageously aligned along a first direction (for example the first group of grippers 300 comprises 12 grippers). This first direction is parallel to the rotation axis 30 of the rotor 34. Advantageously, a second group 302 of said grippers is present arranged aligned on one another, parallel to the first direction and alongside the first group of grippers 300 (for example the second group 302 of said grippers comprises 12 grippers). The first and the second group 301, 302 of the grippers extend along two reciprocally parallel corresponding segments.

Advantageously, the positioner 1 comprises first displacement means 51 of the first gripper 3 between the first and the second location. The first displacement means 51 comprises a first linear actuator 510. It moves the first gripper 3 vertically. The first actuator 510 is movable vertically. In particular, it is extendible vertically. It is operationally connected to the first gripper 3 when it is arranged according to the second orientation and permits the vertical movement thereof. In other words the first actuator 510 moves the first gripper 3 when said rotor 34 is in the first position. In particular, the first actuator 510 moves a hood 50 vertically on which the first gripper 3 is located (the first and the second group 301, 302 of said grippers being advantageously arranged on the hood 50). This hood 50 is integrated into the rotor 30. The first actuator 510 is not movable integrally with the rotor 34 around the rotation axis 30 (but advantageously remains vertical).

Advantageously, the positioner 1 comprises second movement means 52 for moving the first gripper 3 between the first and the second configuration. The second movement means 52 comprises a second linear actuator 520. The second actuator 520 moves the first gripper 3 vertically. The second actuator 520 is extendible vertically. The second actuator 520 is operationally connected to the first gripper 3 when it is arranged in the second orientation and permits the vertical movement thereof. In other words, the second actuator 520 moves the first gripper 3 when said rotor 34 is in the second position (i.e. when the first gripper 3 advantageously faces downwards and intersects an imaginary vertical line passing through the rotation axis 30). In particular, the second actuator 520 moves the hood 50 vertically (on which the first and the second group 301, 302 of grippers are advantageously arranged). The second actuator 520 is not movable integrally with the rotor 34 around the rotation axis 30. The first linear actuator 510 is advantageously controlled by a servomotor. The second linear actuator 520 is also advantageously controlled by a servomotor. The grippers 300 advantageously also comprise a second gripper 35 located on the rotor 34 and which is in a position that is diametrically opposite the first gripper 31 with respect to the axis 30. The second gripper 35 in turn is advantageously assisted by other grippers that operate simultaneously. In this manner, when the first gripper 3 adopts the second orientation and fits one of the caps onto a corresponding container, the second gripper 35 is oriented upwards and receives one of the caps from the supply means 2 (preferably together with the other grippers side-by-side with the second gripper 35).

Advantageously, the supply means 2 of the caps comprises a storage compartment 21 of the caps. Advantageously, the supply means 2 also comprises a launcher that sends, via a launch channel 24, the caps into said storage compartment 21, removing the caps from a tank.

The launch channel 24 is sufficiently narrow to permit the transit of the caps only if they are oriented according to a first or second orientation that are mutually opposite and does not permit other orientations. Advantageously, along said launch channel 24 a rejection system is present for rejecting the caps that have a different orientation from the envisaged orientation (typically, the caps that do not have concavity oriented in a set direction but concavity oriented in the opposite direction). The positioner 1 advantageously comprises cap sterilising means 4 located along the supply means 2 of the caps. This sterilising element is preferably peroxide vapour.

Advantageously, the compartment 21 comprises one or more doors that permit manual removal of the caps present in the compartment 21. This is for example if the type of cap to be positioned has to be changed (by shape or colour). In this case, the caps present in the compartment 21 have to be removed, alternatively they would be dispensed on the movement line 4 of the containers until they are finished.

As mentioned previously, in the preferred solution, the positioner 1 comprises a plurality of grippers 300. The positioner 1 also comprises conduits 22 that connect the compartment 21 to the corresponding grippers 300. Advantageously, the conduits 22 extend from the same wall 210 of the storage compartment 21. This wall 210 is suitably opposite an entrance 25 of the caps in the compartment 21 (by the launch channel 24). The conduits 22 have a cross section having a dimension comprised between 16 and 18 millimetres. This is in order to prevent overturning of the caps inside the conduits 22 (in this manner, the concavity of the caps always remains oriented towards the same wall of every single conduit 22).

The positioner 1 comprises distributing means 23 of the caps that moves in reciprocating motion transversely to an advancement direction of the caps in the compartment 21 to channel the caps in the conduits 22.

The distributing means 23 is located at least partially inside the storage compartment 21 of the caps. The distributing means 23 of the caps move the caps to prevent one or more conduits 22 not being supplied. Advantageously, the distributing means 23 can comprise one or two flights. The distributing means 23 moves the rows of caps by breaking the bridge between the rows and enables the caps to enter the conduits 22. Advantageously, the conduits 22 follow a path that is at least partly curvilinear. At the mouth of the conduits 22, the caps have a concavity facing a vertical plane and the outlet of the conduit 22 by virtue of this path that is at least partially curvilinear, the concavity faces upwards. Advantageously, the conduits 22 comprise a first conduit 220, which in turn comprises a movable gate 221 that enables the outlet of the first conduit 220 to be opened or closed. This gate 221 advantageously extends horizontally. Preferably, this gate 221 comprises bars that enable the first gripper 3 to transit partially. In this manner, the first gripper 3 is able to grasp the cap when the cap is still upstream of the gate 221 (in particular when the cap rests above the gate 221). The gate 221 can be removed horizontally after the first gripper 3 has grasped the cap. Advantageously, the sterilizing means 4 comprises a dispensing nozzle 40 of a sterilising element placed along the first conduit 220 (the means 4 advantageously comprises a nozzle for each of the conduits 22).

This can be advantageously repeated for all the conduits 22.

The positioner 1 further comprises drying means 41 for drying the sterilizing substance off the caps. For example, the drying means 41 comprises a dispenser 410 of sterile air (typically, the sterile air is at 60°C). This dispenser 410 is positioned at the rotor 34 (in a zone in which the first gripper 3 tilts between the first and the second orientation). Advantageously, the first gripper 3 faces the drying means 41, taking on an orientation in which it is rotated by 90° with respect to the first orientation and/or the second orientation.

Advantageously, the first conduit 220 also comprises a stop 222 that stops the advancement of the caps (but advantageously this can be repeated for all the conduits 22). This stop 222 can be a protrusion that can be inserted into the first conduit 220 to stop the caps; the stop 222 can adopt a configuration in which it permits the transit of the caps (in particular it is at least partially extractable from the first conduit 220). The stop 222 can be advantageously driven pneumatically. This stop 222 is advantageously placed upstream of the gate 221. This permits the passage of the first cap of the row of caps present along the first conduit 220 and the locking of the subsequent caps (upstream). In this manner, the first gripper 3 can grasp the first cap of the row externally (without bothering about the obstacle offered by the subsequent caps because they have been spaced apart from one another).

Advantageously, the gate 221 can be driven in function of a sensor that detects the presence, along the movement line 4, of the container that has to be supplied by the first gripper 3 (the first gripper 3 is associated with/placed downstream of the first conduit 221).

A further object of the present invention is a method for positioning a first cap 900 on a corresponding container 90. The method is advantageously implemented by a positioner 1 having one or more of the characteristics described above.

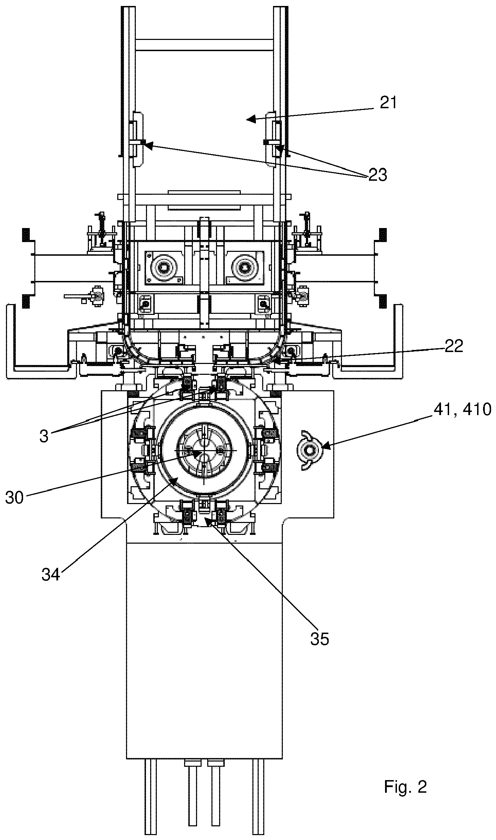

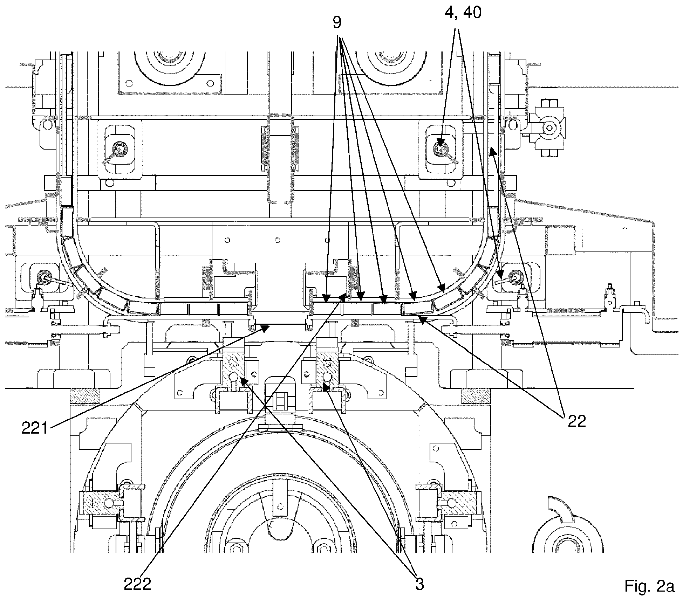

The method advantageously comprises the step of supplying caps 9 (including said first cap 900) to a handling system (comprising the first gripper 3) that permits positioning thereof on corresponding containers. This occurs by means of supply means 2 (as disclosed above). In figure 2a, reference number 9 denotes some caps arranged along the supply means 2. The step of supplying the caps comprises the step of moving the caps along a launch channel 24. This step occurs by means of a launcher that imposes a push on the caps to move the caps along the launch channel 24. The step of supplying the caps also involves conveying the caps along the launch channel 24 until a storage compartment 21 of the caps is reached. Along the launch channel 24, the method comprises the step of rejecting caps that have an undesired alignment (i.e. the caps that, at least at one section of the launch channel 24, do not have the concavity oriented towards a preset plane). In this context, the method recognizes the caps that have an undesired alignment. For example, this is obtained by trying to insert a protrusion into the cavity of the caps facing the preset plane. If the protrusion is not inserted into the cavity this means that the specific cap is not oriented correctly. It can then be ejected by a piston. In technical jargon, this can also be defined as a mechanical trap.

Inside the storage compartment 21, the method comprises the step of moving alternatively distributing means 23 of the caps (the movement is preferably horizontal). This is for the purpose of preventing undesired obstructions being created.

The method comprises the step of sending by a first conduit 220 the first cap 900 as far as the first gripper 3 (this step is normally part of the step of supplying caps 9).

Advantageously, the step of sending, by the first conduit 220, the first cap 900 as far as the first gripper 3 involves positioning along the first conduit 220 a plurality of caps in a row (they are arranged in Indian file). These caps also includes the first cap 900. The method advantageously also comprises the step of retaining by a stop 222 the second cap of the row. This stop 222 is movable and can be retracted to enable the caps to transit. The step of retaining by the stop 222 the second cap of the row permits the passage of the first cap 900 (which is located at the start of the row); it can then be grasped by the first gripper 3 without the second cap of the row obstructing the movement of the first gripper 3 and without the risk that also the second cap of the row can be dispensed.

The step of sending, by a first conduit 220, the first cap 900 as far as the first gripper 3 further comprises the step of positioning the first cap 900 on a gate 221 closing the first conduit 220.

The method advantageously comprises the step of sterilizing the caps that move along the first conduit 220. This comprises the substep of spraying a sterilizing substance (for example peroxide vapour) onto the caps.

Preferably, a plurality of conduits 22 are present (of which the first conduit 220 is part) that send the caps from the storage compartment 21 to a plurality of grippers 300 working in parallel. The caps move in a single row (i.e. Indian file) along the conduits 22. Both the storage compartment 21 and the conduits 22 are part of the supply means 2.

The method comprises the step of picking up, by a first gripper 3, the first cap 900 coming from the supply means 2. The first cap 900 is advantageously grasped externally by the first gripper 3. The first gripper 3 does not come into contact with an inner cavity of the first cap 900 (for reasons of hygiene, this cavity can come into contact with the product once it is applied to the container).

The step of picking up by a first gripper 3 the first cap 900 coming from supply means 2 comprises the step of displacing the first gripper 3 from a first location (see figure 9a) to a second location (see figure 9b) by moving the first gripper 3 away from said rotation axis 30 and moving the first gripper 3 near the supply means 2. The step of displacing the first gripper 3 from the first to the second location occurs with the first gripper 3 arranged according to the first orientation. What has already been described previously with reference to the first and second location is referred to. This implies displacement by translation of the first gripper 3 between the first and the second location. In the second location, the first gripper 3 is raised with respect to the first location. In the second location, the first gripper 3 grasps the first cap 900 coming from the supply means 2.

The step of picking up, by a first gripper 3, the first cap 900 coming from the supply means 2 comprises the substeps of:
- partially passing the first gripper 3 through the gate 221 on which the first cap 900 is placed (the gate 221 advantageously comprises a plurality of bars that permit a partial transit of a portion of the first gripper 3);
- grasping the first cap 900 placed on the gate 221;
- opening the gate 221 after grasping of the first cap 900 by the first gripper 3. The gate 221 is opening by sliding to one side (so that it does not interfere with the first gripper 3).

These substeps occur with the first gripper 3 arranged according to the first orientation and placed in the second location.

The method further comprises the step of moving the first gripper 3 and the first cap 900 picked up by the first gripper 3 by orienting the first cap 900 and the first gripper 3 to a movement line 4 of the containers along which the container 90 is placed (thus the first gripper 3 and the first cap 900 are positioned to face the movement line 4). Advantageously, this comprises the step of moving the first gripper 3 from the first orientation (see figures 9a, 9b, 9c) to the second orientation (see figures 9d, 9e, 9f). The first and the second orientation were described previously in detail. In other words, the step of moving the first gripper 3 and the first cap 900 comprises the step of rotating the first gripper 3 between the first orientation in which it faces an end portion of the supply means 2 and the second orientation. In this second orientation, the first gripper 3 faces the movement line 4 of the containers. Advantageously, this rotation occurs around a rotation axis 30, which is typically horizontal. When the first gripper 3 adopts the first orientation, the first cap 900 has the concavity intended to receive the neck of the container facing upwards; when the first gripper 3 adopts the second orientation the first cap 900 has this concavity facing downwards. The first gripper 3, when it adopts the first orientation, is higher than when it adopts the second orientation. The position assumed by the first gripper 3 when it adopts the first orientation and the position assumed by the first gripper 3 when it adopts the second orientation are advantageously aligned along a vertical plane that intercepts the rotation axis 30.

After grasping the first cap 900, the first gripper 3 is retracted from the second location to the first location described above so as to be able to perform rotation from the first to the second orientation (transition from figure 9c to figure 9d).

During the step of moving the first gripper 3 from the first to the second orientation, the method comprises the step of drying the first cap 900 to eliminate the residues of a possible sterilizing liquid. In this context, the method provides a wait at an intermediate drying station (in this intermediate drying station the first gripper 3 is advantageously rotated by 90° with respect to the first and second orientation).

The method further comprises the step of fitting the first cap 900 to the container 90. During the step of fitting the first cap 900 to the container, the movement line 4 is advantageously stopped. The movement line 4 will not then advance when the first cap 900 is fitted to the container.

The step of fitting the first cap 900 to the container 90 comprises the step of displacing the first gripper 3 by moving further apart the first gripper 3 from said rotation axis 30 and moving the first gripper 3 nearer to the movement line 4 of the containers. This supposes a movement (typically a translation) from a first configuration (see figure 9d) to a second configuration (see figure 9f). This occurs with the first gripper 3, which is in the second orientation.

In addition, the method comprises the step of releasing the first cap 900 from the first gripper 3 only after fitting the first cap 900 to the container 90. In particular, one part of the container (in particular one part of the neck of the container) extends inside a concavity of the container. This typically occurs by moving from the first to the second configuration.

After yielding the first cap 900 to the container 90, the method comprises the step of retracting the first gripper 3 from the second to the first configuration and rotating the first gripper 3 again to adopt the first orientation. In this manner, it is ready to receive a new cap from the supply means 2. The operation can thus be repeated cyclically.

The present invention achieves important advantages.

Above all, it enables the number of caps to be improved that are fitted correctly to the containers. In fact, the caps are applied to the containers by a gripper and are not simply dropped by the force of gravity with the risk that the operation is unsuccessful. Secondly, it enables the caps to be sterilised effectively.

The invention as it is conceived is susceptible to numerous modifications and variations, all falling within the scope of the inventive concept characterising it. Further, all the details can be replaced with other technically equivalent elements. In practice, all the materials used, as well as the dimensions, can be any according to requirements.

## Claims

1. A positioner of caps on corresponding containers comprising:
i) a transit zone (400) of the containers;
ii) supply means (2) of the caps;
**characterised in that** it comprises a first gripper (3) for gripping one of the caps; said first gripper (3) being movable between:
- a first orientation in which it is facing towards the supply means (2) in order to pick up one of the caps;
- a second orientation in which it is facing towards said transit zone (400) of the containers in order to fit one of the caps on one of said containers.

2. The positioner according to claim 1, **characterised in that** it comprises a movement line (4) for moving the containers which is located at least partly in said transit zone (400); in said second orientation the first gripper (3) being orientated towards the movement line (4); the first gripper (3) being movable between a first and a second configuration, while maintaining said second orientation; in said second configuration being closer to the movement line (4) for moving the containers with respect to when in the first configuration.

3. The positioner according to claim 2, **characterised in that** the first gripper (3) is rotatable about a rotation axis (30) in order to pass from the first to the second orientation; the first gripper (3) being movable radially with respect to the axis (30) in order to pass from the first to the second configuration so as to fit one of the caps on the container.

4. The positioner according to claim 3, **characterised in that** it comprises a rotor (34) which supports said first gripper (3); the first orientation of said first gripper (3) corresponds to a first position assumed by the rotor (34); the second orientation of the first gripper (3) corresponds to a second position assumed by the rotor (34); in said second position the rotor (34) being rotated with respect to the first position about the axis (30).

5. The positioner according to claim 4, **characterised in that** said rotor (34) comprises a second gripper (35) which is located in a diametrically opposite position with respect to the first gripper (31) with respect to the axis (30).

6. The positioner according to any one of the preceding claims, **characterised in that** the first gripper (3) comprises a first and a second jaw (31, 32) suitable, in combination, to grip and release one of the caps; the first and second jaw (31, 32) comprising a retaining relief (33) to retain the caps destined to engage in a corresponding groove of the caps.

7. The positioner according to any one of the preceding claims, **characterised in that** it comprises sterilisation means (4) for sterilising the caps located along the supply means (2) of the caps.

8. The positioner according to any one of the preceding claims, **characterised in that** it comprises a plurality of grippers (300) of which the first gripper (3) is a part;
said supply means (2) comprising:
- a storage compartment (21) to store the caps;
- conduits (22) which connect the compartment (21) to corresponding grippers (300).

9. The positioner according to claim 8, **characterised in that** it comprises distribution means (23) to distribute the caps which are at least partly located inside the compartment (21) and which move with an alternated motion transversally to an advancement direction of the caps in order to channel the caps into the conduits (22);
said conduits (22) developing from a same wall (210) of said storage compartment (21).

10. A positioning method for positioning a first cap (900) on a corresponding container (90) **characterised in that** it comprises steps of:
- picking up, using a first gripper (3), the first cap (900) coming from supply means (2);
- moving the first gripper (3) and the first cap (900) picked up by the first gripper (3) orientating the first cap (900) and the first gripper (3) towards a movement line (4) for moving the containers along which the container (90) is positioned;
- fitting the first cap (900) on the container (90);
- releasing the first cap (900) from the first gripper (3) after having fitted the first cap (900) on the container (90).
